# EUROPEAN PATENT SPECIFICATION

(11) **EP 2 678 130 B1**
(45) Date of publication and mention of the grant of the patent: **24.05.2017**
(21) Application number: 12706935.9
(22) Date of filing: 17.02.2012
(51) Int. Cl.: B23K 9/04, F22B 37/10

(54) **WELD OVERLAY STRUCTURE AND A METHOD OF PROVIDING A WELD OVERLAY STRUCTURE**
SCHWEISSÜBERLAGERUNGSSTRUKTUR UND VERFAHREN ZU DEREN HERSTELLUNG
STRUCTURE DE SOUDURE DE RECOUVREMENT ET PROCÉDÉ DE FABRICATION

(30) Priority: 22.02.2011 US 201113032002
(43) Date of publication of application: 01.01.2014
(73) Proprietor: Amec Foster Wheeler North America Corp., Hampton, New Jersey 08827-9000 (US); Pourin Welding Engineering Co. Ltd., Gonghe Town, Heshan Jiangmen City Guangdong Province (CN)
(72) Inventor: MURPHY, John, Shanghai (CN); LEE, Haisheng, Guangdong (CN)
(74) Representative: Genip Oy
(86) International application number: PCT/IB2012/050734
(87) International publication number: WO 2012/114242

(56) References cited:
- EP-A1- 1 535 696
- WO-A1-2010/064464
- FR-A1- 2 889 980
- JP-A- 2000 084 665
- JP-A- 2003 290 919

## Description

### BACKGROUND OF THE INVENTION

### Field of the Invention

The present invention relates to a weld overlay structure and a method of providing a weld overlay structure on a heat transfer tube or a membrane surface, as known from JP-A-2003 290919.

The invention relates especially to a weld overlay structure and a method of providing a weld overlay structure on a heat transfer tube or a membrane surface which is in, or is to be used in, a boiler, but it may also be applied to chemical process vessels or in maritime applications.

### Description of the Related Art

A conventional membrane surface, or a waterwall, made of parallel tubes connected together by metal strips, so-called fins, to construct a wall forming, for example, an enclosure of a furnace, is a typical example of heat transfer surfaces of a power boiler. High pressure water flows inside the tubes to extract heat from high temperature combustion gases on the outer surface of the tubes. Water tubes and membrane surfaces in different boilers, such as biomass-fired boilers, coal-fired boilers, refuse-derived fuel (RDF) boilers, black liquor recovery boilers or waste heat recovery boilers, are conventionally made of base materials, such as carbon steel, low alloy steels, or ferritic steels. These materials provide good strength and structural integrity, and excellent resistance to high temperature, high pressure water and steam used in the heat transfer.

Heat transfer tubes and membrane surfaces are often subject to a high heat flux, as well as high temperature corrosion and particulate erosion/corrosion attack. The base materials, in many cases, do not provide adequate resistance to high temperature corrosion attack from, for example, combustion products in a power boiler or from a hot exhaust flue gas stream in a waste heat recovery boiler. The current use of sub-stoichiometric combustion techniques, i.e., a reducing atmosphere in a portion of the furnace, combustion of chlorine-containing coals, inherently high heat fluxes in supercritical pressure units, and adherent ash, exacerbate corrosive attack on the outer surfaces of the water tubes and membrane surfaces. In RDF and black liquor recovery boilers, the heat fluxes and temperatures are typically lower, but corrosive conditions exist based on the fuel chemistry. Due to, for example, the reasons mentioned above, wastage rates of heat transfer tubes and membrane surfaces can be significant, up to 2.5 mm/year or more, and can rapidly lead to a forced outage of the boiler. Thus, there is a need to improve the corrosion resistance of the outer surface of many heat transfer tubes and membrane surfaces.

Providing a corrosion heat resistant coating of a high-temperature corrosion-resistant alloy by a weld overlay cladding is a generally known, cost-effective, method of protecting heat exchange surfaces, such as membrane surfaces, screen tubes, and superheater/reheater tubes in the upper furnace of the boilers. It has been noticed that a weld overlay cladding by materials having at least 20% Cr and a low Fe content on the surfaces exposed to furnace gases significantly reduces the wall wastage rate.

The metallurgical bond resulting from the weld overlay, as opposed to a weaker bond resulting from so-called metallization, is advantageous, for example, in avoiding spalling of the coating. In addition, the metallization technique involves thickness limits, beyond which temperature differences between the base material and the metal spray, as well as mechanical bond defects, can also lead to spalling.

At high metal temperatures, such as temperatures on heat exchange surfaces of supercritical pressure boilers, a high alloy material called Alloy 622 (Ni-22Cr-13Mo-3W) is suitable due to high temperature corrosion advantages associated with the molybdenum. At lower temperatures, typical for RFD boilers and black liquor recovery boilers, a high alloy material called Alloy 625 (Ni-22Cr-9Mo-3.5Nb) is sufficient. Alloy 625 is slightly less expensive and much easier to weld than Alloy 622. Depending on the combustion conditions in the boiler, a wide variety of other corrosion and erosion/corrosion resistant alloys, including different stainless steels and nickel-base alloys, also have been used successfully.

A high-temperature corrosion-resistant weld overlay cladding can be provided as a field application performed inside the boiler on the waterwall area where tube wall thinning has taken plase, as a shop weld overlay application on panels, which are then installed in the boiler to replace worn panels, or by using spiral overlay tubes for the construction of waterwall panels. A spiral overlay, a so-called 360 degrees weld overlay, is made by building a continuous spiral weld bead on the outer surface of a tube by having, typically, an overlap of 30-50% between successive circles of the bead. The width of the weld bead is typically from about 10 mm to about 20 mm, for example, about 15 mm. A weld overlay on the tubes and fins of a membrane surface, a so-called 180 degrees weld overlay, is correspondingly made of multiple straight weld beads parallel to the tube centerline axis having, typically, an overlap of 30-50% between adjacent weld beads. Thus, the weld overlay is typically made of a preprogrammed weld bead sequence to achieve a relatively uniform coverage, with a typical minimum thickness of about 1.8 mm.

It is generally known that in a conventional weld overlay technique, the surface layer of the substrate steel is melted and mixed with the molten weld metal of the corrosion-resistant alloy. As a result, the concentrations of the important alloying elements, such as Cr, in the weld overlay, will be lower than those of the weld wire. In other words, penetration of the weld metal into the base material and the liquification with the weld metal results in an undesirable comingling of the materials. Due to the comingling, the weld metals, especially Cr, is diluted, and desired corrosion protection is not obtained.

Relatively low welding parameters, voltage and current, can be used in the GMAW (gas metal arc welding) method to mitigate the dilution of Cr. However, this results in a coarse texture on the tubes. U.S. Patent No. 6,013,890 suggests to smooth such a coarse texture by autogenous GTAW(gas tungsten arc welding) remelting of the surface. This, however, results in added heat input to the cladding and causes further dilution of the weld metal. Generally, colder welding may also result in a lack of fusion between the overlapping beads or to the base material, which is especially harmful when there is a need to bend the tube. If detected, defective surface textures opened during bending can be repaired, for example, by additional heat input using GTAW, but, then again, more undesirable Cr dilution is created.

U.S. Patent No. 3,133,184 discloses a method of decreasing the dilution of a weld material, wherein a stainless steel alloy cladding layer is provided by applying to the base metal surface a stainless steel alloy weld material to form a first weld bead in which the alloy material is substantially (e.g., 50%) diluted by the base metal material. The first stainless steel alloy weld material is then overlaid with a second weld material. The rate of application of the second weld material is calculated to be such as to cause the second applied weld material to dissolve the first weld bead substantially entirely, without dissolving any significant further amounts of the base material.

European Patent No. 1 486 284 discloses a method of clad welding boiler tube walls, in which a first welding torch produces an interlayer of a weld bead and a second weld torch, which is operationally connected to the first weld torch and follows the first weld torch at a predetermined distance, produces a cover layer of the weld bead, which completely covers the interlayer. This method aims to provide a weld overlay having a sufficient and relatively even thickness.

U.S. Patent No. 5,569,396 discloses a single-pass weld overlay method for increasing a selected metal component in a clad layer. According to this method, a single pass of weld overlay of a chromium containing weld metal is placed on the surface of a chromium plated substrate to provide an increased chromium weld clad deposit.

International Patent Publication No. WO 99/50018 discloses a method of forming a weld overlay, which is deposited in a wave-like fashion to form, for example, a sinusoidal pattern. The bead welding can be deposited to form a cladding comprising a single layer, or a cladding comprising multiple layers. When deposited in multiple layers, an upper bead welding layer can be deposited directly over the underlying layer or offset to overlap the interstices of the underlying layer to afford greater protection thereto. The wave pattern of the clad layer aims to substantially improve the wear resistance of the clad plate and to reduce the channel wear brought about by exposure to highly abrasive environments.

Thermal conductivity of a high alloy weld overlay is lower than that of the base metal. Thus, peak metal surface temperatures of the tubes, and temperature differences across the tubes, are increased by an amount depending on the thickness of the weld overlay. This gives rise to increased stresses in the tubes, especially, in supercritical pressure units. Increased stresses in the tubes, especially when combined with a rough texture due to low welding parameters and possible high application speed, can also lead to so-called corrosion fatigue cracks (CFC) in the surface.

### SUMMARY OF THE INVENTION

An object of the present invention is to provide a method of providing a weld overlay structure on a heat transfer tube or a membrane surface, by which problems of the prior art described above can be minimized.

Another object of the present invention is to provide a weld overlay structure on a heat transfer tube or a membrane surface by which problems of the prior art described above can be minimized.

According to one aspect, the present invention provides a method of providing a weld overlay structure on a heat transfer tube or a membrane surface according to claim 1.

According to another aspect, the present invention provides a weld overlay structure on a heat transfer tube or a membrane surface, in accordance with claim 8.

According to a preferred embodiment of the present invention, the first continuous bead portion and the second continuous bead portion are actually successive circles of one continuous weld bead, forming a spiral on a tube. Thus, they form a bottom layer of a spiral weld overlay, i.e., of a 360 degrees overlay. The third continuous bead portion, placed into a natural groove between the first and second bead portions, then forms another spiral tube overlay layer on top of the bottom layer. The continuous weld beads typically have a width from about 15 mm to about 20 mm. Successive circles of the bottom layer have a small overlap, advantageously from about 3 mm to about 5 mm. Preferably, the overlap is from about 15 % to about 20 %, i.e., it is clearly less than a conventional overlap of 30-50 %.

Because the centers of the circles that form the bottom layer of the spiral weld overlay are more spaced than those of a conventional spiral weld overlay, the heat input to the tube is less than conventional. The making of the top layer of the spiral weld overlay is advantageously delayed by a suitable time from the making of the bottom layer, whereby the heat build-up is further reduced. Due to the controlled heat build-up, the dilution of the high alloy weld material can be minimized.

It has been noticed that by using the method according to the present invention, the dilution of Cr on the surface of the top layer deposited on an initial layer of Alloy 622 or Alloy 625 is reduced to between 2-4 %. Also, for example, the content of Fe of the weld overlay is reduced to a suitable level.

According to another embodiment of the present invention, the first continuous bead portion, the second continuous bead portion and the third continuous bead portion form parallel straight beads formed on a membrane surface. Thereby, the first continuous bead portion and the second continuous bead portion form a bottom layer of a 180 degrees overlay and the third continuous bead portion forms another layer on top of the bottom layer. The advantages and features described above for a 360 degrees overlay, can generally be obtained by a 180 degrees overlay, as well.

The overlay material of the third continuous bead portion may be different from that used in the first and second continuous bead portions, but advantageously, the same overlay material is used both in the third continuous bead portion and in the first and second continuous bead portions.

The first and second continuous bead portions may be applied by using different weld heads, but advantageously, they are applied by using a common weld head. Correspondingly, the third continuous bead portion may be applied by using a separate weld head, but advantageously, the first continuous bead portion, the second continuous bead portion, and the third continuous bead portion are all applied by using a common weld head.

The overlay welding of high alloys according to the present invention, as described above, allows the use of different welding parameters in the bottom layer and the top layer. Thereby, it is possible to further reduce the heat input, to control the dilution of the weld metal, and also to optimize the final texture of the weld overlay.

An advantage of the weld overlay method according to the present invention is that the placing of a top layer in the groove between the successive beads of the bottom layer naturally creates a weld overlay having approximately a 100 % bead overlap for this layer, a smooth surface with a relatively constant thickness. Thereby, it is possible to reduce the minimum thickness of the weld overlay to less than 1.5 mm, preferably, to less than 1.3 mm. Due to the weld overlay according to the present invention, i.e., a weld overlay, which is thinner and of a more uniform thickness than the conventional weld overlay, it is possible to reduce high surface temperatures associated with conventional weld overlays. The smoothness of the surface is advantageous, especially in improving the durability of the weld overlay by reducing the initiation sites for the corrosion fatigue cracking (CFC).

The above brief description, as well as further objects, features, and advantages of the present invention will be more fully appreciated by reference to the following detailed description of the currently preferred, but nonetheless illustrative, embodiments of the present invention, taken in conjunction with the accompanying drawings.

### BRIEF DESCRIPTION OF THE DRAWINGS

FIGS. 1 a and 1 b show a schematic cross section of a conventional 360 degrees weld overlay structure.
FIG. 2 shows a schematic cross section of a 360 degrees weld overlay structure according to an embodiment of the present invention.
FIG. 3 shows a schematic cross section of a 180 degrees weld overlay structure according to another embodiment of the present invention.

### DETAILED DESCRIPTION OF THE INVENTION

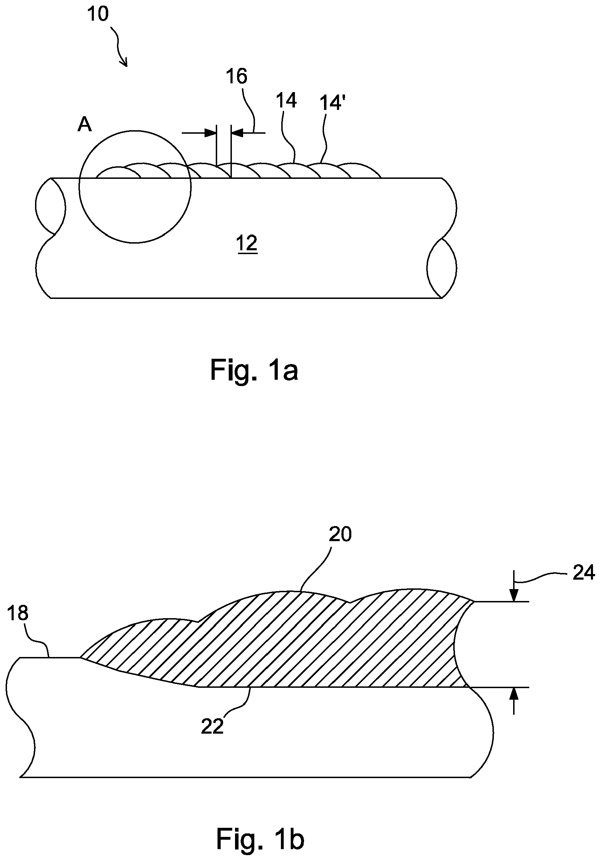

FIG. 1 a shows a schematic cross section of a conventional spiral weld overlay 10, or a 360 degrees weld overlay, on a heat transfer tube 12. The weld overlay is formed by applying a continuous weld bead as a spiral on the outer surface of the tube. Conventionally, the successive circles 14, 14N of the spiral have a relatively large overlap 16, typically, about 30% to about 50% or from about 6 mm to about 10 mm.

FIG. 1b shows a schematic enlarged view of the detail A of FIG. 1a. FIG. 1b shows, in addition to the original outer surface 18 of the tube and the outer surface 20 of the formed weld overlay, also the fusion line 22, i.e., the inner surface of the layer that is formed by the welding. The fusion line extends inside the original tube, because the base metal tube material is partially melted and mixed with the high alloy weld material.

As is shown in FIGS. 1a and 1b, in a conventional weld overlay method is created a cladding, which has a relatively coarse as-welded outer surface and a relatively high thickness 24 to avoid violation of minimum thickness requirements. Mainly, due to the large overlap between the successive circles of the spiral overlay, and/or a common need to smooth the surface with a second GTAW torch, the degree of melting of the tube material is relatively high, and the corrosion resistance of the overlay may be reduced.

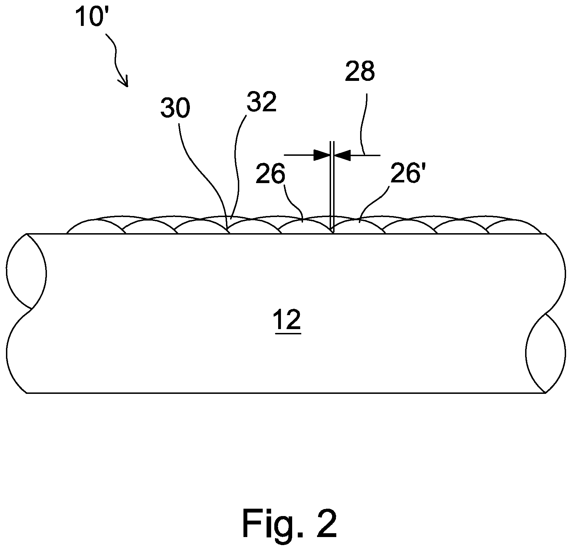

FIG. 2 shows a schematic cross-sectional view of a 360 degrees weld overlay 10', in accordance with an embodiment of the present invention. As is shown in FIG. 2, the overlap 28 between successive circles of the initial spiral weld bead is clearly less than that shown in FIG. 1a. Preferably, the overlap is from about 15 % to about 20 % or from about 3 mm to about 5 mm.

Between each pair of successive circles of the weld bead, there is formed a groove 30. According to the present invention, a top layer 32 of the weld overlay is accurately placed in the groove 30. Thereby, a two-layer weld overlay is formed, which allows ideal welding parameters and is clearly smoother than what is usually obtained by using a conventional method, as shown in FIG 1a. Moreover, mainly because of the small overlap between the circles of the bottom layer of the overlay, the degree of melting of the base metal of the tube is typically clearly less than that caused by using a conventional method. Therefore, the dilution of the weld metal is reduced, and a high corrosion resistance is obtained.

Successive circles of the top layer 32 of the weld overlay are preferably made so as to at least nearly cover the bottom layer, but without overlap between the successive circles. A smooth surface without excessive heating of the base material is ideally made by having a 100 % overlap between the top layer and bottom layer, without overlap between the circles of the top layer. In practice, there may be from about a 10 % overlap to about a 10 % gap between successive circles of the top layer.

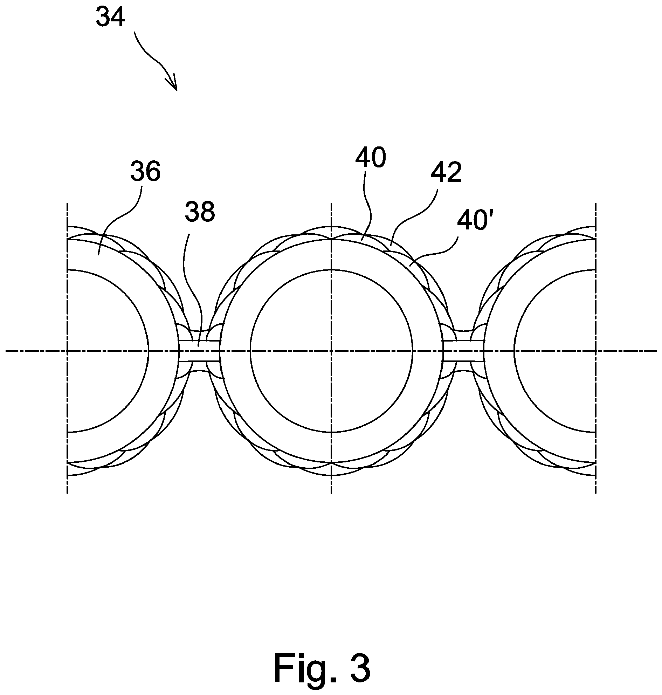

FIG. 3 shows a schematic cross-sectional view of a 180 degrees weld overlay 34, in accordance with another embodiment of the present invention. The 180 degrees weld overlay is made on a membrane surface consisting of tubes 36 connected by fins 38. The weld overlay is made by first making a bottom layer by placing parallel straight weld beads 40, 40N on the tubes 36 and the fins 38. Successive weld beads, at least on the tubes, are made to have a small overlap, typically about 15% to about 20 %. Similarly, as in the embodiment shown in FIG. 2, a top layer of the weld overlay is then made by placing further straight weld beads 42 in the grooves naturally forming between the weld beads of the bottom layer. This structure provides the same advantages as described above for the 360 degrees weld overlay.

While the invention has been described herein by way of examples in connection with what are at present considered to be the most preferred embodiments, it is to be understood that the invention is not limited to the disclosed embodiments, but is intended to cover various combinations or modifications of its features and several other applications included within the scope of the invention as defined in the appended claims.

## Claims

1. A method of providing a weld overlay structure on a heat transfer tube or a membrane surface, the method comprising the steps of:
applying a first continuous bead portion of an overlay material onto the heat transfer tube or membrane surface by using a weld head to melt the overlay material;
applying a second continuous bead portion of the overlay material onto the heat transfer tube or membrane surface by using a weld head to melt the overlay material, wherein the second bead portion partially overlaps with the first bead portion, forming a groove between the first bead portion and the second bead portion; and
applying a third continuous bead portion of an overlay material onto the heat transfer tube or membrane surface by using a weld head to melt the overlay material into the groove between the first bead portion and the second bead portion, so as to form a relatively smooth surface, wherein the weld overlay structure comprises multiple successive first and second continuous bead portions and **characterized in that** the weld overlay structure comprises multiple successive third continuous bead portions having from about a 10 % overlap to about 10 % gap between the successive third continuous bead portions.

2. The method according to claim 1, wherein the overlay material of the third continuous bead portion is the same as that of the first continuous bead portion and the second continuous bead portion.

3. The method according to claim 1, wherein the first continuous bead portion and the second continuous bead portion are applied by using a common weld head.

4. The method according to claim 3, wherein the first continuous bead portion, the second continuous bead portion, and the third continuous bead portion are applied by using a common weld head.

5. The method according to claim 1, wherein the first continuous bead portion and the second continuous bead portion are applied by using first welding parameters, and the third continuous bead portion is applied by using second welding parameters, which are different from the first welding parameters.

6. The method according to claim 1, wherein the first continuous bead portion and the second continuous bead portion form a spiral tube overlay, and the third continuous bead portion forms another spiral tube overlay.

7. The method according to claim 1, wherein the first continuous bead portion, the second continuous bead portion and the third continuous bead portion form parallel straight beads.

8. A weld overlay structure on a heat transfer tube or a membrane surface, the weld overlay structure comprising:
a first continuous bead portion of an overlay material applied onto the heat transfer tube or membrane surface by using a weld head to melt the overlay material;
a second continuous bead portion of the overlay material applied onto the heat transfer tube or membrane surface by using a weld head to melt the overlay material, wherein the second bead portion partially overlaps with the first bead portion, forming a groove between the first bead portion and the second bead portion; and
a third continuous bead portion of an overlay material applied onto the heat transfer tube or membrane surface by using a weld head to melt the overlay material into the groove between the first bead portion and the second bead portion, so as to form a relatively smooth surface, wherein the weld overlay structure comprises multiple successive first and second continuous bead portions and **characterized in that** the weld overlay structure comprises multiple successive third continuous bead portions having from about a 10 % overlap to about 10 % gap between the successive third continuous bead portions.

9. The weld overlay structure according to claim 8, wherein the average overlap between the first bead portion and the second bead portion is less than 20 %.

10. The weld overlay structure according to claim 9, wherein the average overlap between the first bead portion and the second bead portion is less than 15 %.

11. The weld overlay structure according to claim 8, wherein the average overlap between the first bead portion and the second bead portion is less than 5 mm.

12. The weld overlay structure according to claim 8, wherein the average overlap between the first bead portion and the second bead portion is less than 3 mm.

13. The weld overlay structure according to claim 8, wherein the overlay material of the third continuous bead portion is the same as that of the first and second continuous bead portions.

14. The weld overlay structure according to claim 8, wherein the first continuous bead portion and the second continuous bead portion form a spiral tube overlay, and the third continuous bead portion forms another spiral tube overlay.

15. The weld overlay structure according to claim 8, wherein the first continuous bead portion, the second continuous bead portion and the third continuous bead portion form parallel straight beads.

## Patentansprüche

1. Verfahren zur Bereitstellung eine Schweißüberzugstruktur auf einem Wärmeübertragungsrohr oder einer Membranoberfläche, welches Verfahren folgende Schritte umfasst:
Auftragen eines ersten kontinuierlichen Nahtteils von Überzugsmaterial auf das Wärmeübertragungsrohr oder die Membranoberfläche bei Verwendung eines Schweißkopfes, um den Überzug einzuschmelzen;
Auftragen eines zweiten kontinuierlichen Nahtteils von Überzugsmaterial auf das Wärmeübertragungsrohr oder die Membranoberfläche bei Verwendung eines Schweißkopfes, um das Überzugsmaterial einzuschmelzen, wobei der zweite Nahtteil den ersten Nahtteil teilweise überlappt, Bildung einer Furche zwischen dem ersten Nahtteil und dem zweiten Nahtteil ; und
Auftragen eines dritten kontinuierlichen Nahtteils von Überzugsmaterial auf das Wärmeübertragungsrohr oder die Membranoberfläche unter Verwendung eines Schweißkopfes, um den Überzugsmaterial in die Furche zwischen dem ersten Nahtteil und dem zweiten Nahtteil einzuschmelzen, um eine relativ glatte Oberfläche zu bilden, wobei der Schweißüberzugstruktur mehrere aufeinanderfolgende erste und zweite kontinuierliche Nahtteile umfasst und **dadurch gekennzeichnet ist, dass** die Schweißüberzugstruktur mehrere aufeinanderfolgende dritte kontinuierliche Nahtteile umfasst mit etwa 10 % Überlappung bis etwa 10 % Spalt zwischen den aufeinanderfolgenden dritten kontinuierlichen Nahtteilen.

2. Verfahren nach Anspruch 1, wobei das Überzugsmaterial des dritten kontinuierlichen Nahtteils das gleiche ist wie dasjenige des ersten kontinuierlichen Nahtteils und des zweiten kontinuierlichen Nahtteils.

3. Verfahren nach Anspruch 1 oder 2, wobei der erste kontinuierliche Nahtteil und der zweite kontinuierliche Nahtteil bei Verwendung eines gemeinsamen Schweißkopfes aufgetragen werden.

4. Verfahren nach Anspruch 3, wobei der erste kontinuierliche Nahtteil, der zweite kontinuierliche Nahtteil und der dritte kontinuierlichen Nahtteil unter Verwendung eines gemeinsamen Schweißkopfes aufgetragen werden.

5. Verfahren nach Anspruch 1, wobei der erste kontinuierliche und der zweite kontinuierliche Nahtteil unter Anwendung von ersten Schweißparametern aufgetragen werden, und der dritte kontinuierliche Nahtteil unter Anwendung von zweiten Schweißparametern aufgetragen wird, die sich von den ersten Schweißparametern unterscheiden.

6. Verfahren nach Anspruch 1, wobei der erste kontinuierliche Nahtteil und der zweite kontinuierliche Nahtteil eine spiralförmigen Rohrüberzug bilden, und die dritte kontinuierliche Nahtteil einen weiteren spiralförmigen Rohrüberzug bildet.

7. Verfahren nach Anspruch 1, wobei der erste kontinuierliche Nahtteil und der zweite kontinuierliche Nahtteil und der dritte kontinuierliche Nahtabschnitt parallele gerade Nähte bilden.

8. Schweißüberzugstruktur auf einem Wärmeübertragungsrohr oder einer Membranoberfläche, welche Schweißüberzugstruktur folgendes umfasst:
einen ersten kontinuierlichen Nahtteil von Überzugsmaterial, der auf das Wärmeübertragungsrohr oder die Membranoberfläche bei Verwendung eines Schweißkopfes aufgetragen worden ist, um das Überzugsmaterial einzuschmelzen;
einen zweiten kontinuierlichen Nahtteil von Überzugsmaterial, der auf das Wärmeübertragungsrohr oder die Membranoberfläche bei Verwendung eines Schweißkopfes aufgetragen worden ist, um das Überzugsmaterial einzuschmelzen, wobei der zweite Nahtteil den ersten Nahtteil teilweise überlappt und eine Furche zwischen dem ersten Nahtteil und dem zweiten Nahtteil bildet; und
einen dritten, kontinuierlichen Nahtteil von Überzugsmaterial, der auf das Wärmeübertragungsrohr oder die Membranoberfläche bei Verwendung eines Schweißkopfes aufgetragen worden ist, um das Überzugsmaterial in die Furche zwischen dem ersten Nahtteil und dem zweiten Nahtteil einzuschmelzen, um eine relativ glatte Oberfläche zu bilden, wobei die Schweißüberzugstruktur mehrere aufeinanderfolgende erste und zweite kontinuierliche Nahtteile umfasst und **dadurch gekennzeichnet ist, dass** die Schweißüberzugstruktur mehrere aufeinanderfolgende dritte kontinuierliche Nahtteile umfasst mit etwa 10 % Überlappung bis etwa 10 % Spalt zwischen den aufeinanderfolgenden dritten kontinuierlichen Nahtteilen.

9. Schweißüberzugstruktur nach Anspruch 8, wobei die mittlere Überlappung zwischen dem ersten Nahtteil und dem zweiten Nahtteil kleiner als 20 % ist.

10. Schweißüberzugstruktur nach Anspruch 9, wobei die mittlere Überlappung zwischen dem ersten Nahtteil und dem zweiten Nahtteil kleiner als 15 % ist.

11. Schweißüberzugstruktur nach Anspruch 8, wobei die mittlere Überlappung zwischen dem ersten Nahtteil und dem zweiten Nahtteil kleiner als 5 mm ist.

12. Schweißüberzugstruktur nach Anspruch 8, wobei die mittlere Überlappung zwischen dem ersten Nahtteil und dem zweiten Nahtteil kleiner als 3 mm ist.

13. Schweißüberzugstruktur nach Anspruch 8, wobei das Überzugsmaterial des dritten Nahtteils dasselbe wie das der ersten und zweiten kontinuierlichen Nahtteile ist.

14. Schweißüberzugstruktur nach Anspruch 8, wobei der erste kontinuierliche Nahtteil und der zweite kontinuierliche Nahtteil einen spiralförmigen Rohrüberzug bilden, und der dritte kontinuierliche Nahtteil einen weiteren spiralförmigen Rohrüberzug bildet.

15. Schweißüberzugstruktur nach Anspruch 8, wobei der erste kontinuierliche Nahtteil, der zweite kontinuierliche Nahtteil und der dritte kontinuierliche Nahtteil parallele gerade Nähte bilden.

## Revendications

1. Procédé de fourniture d'une structure de soudure de recouvrement sur un tube de transfert de chaleur ou une surface de membrane, le procédé comprenant les étapes de :
appliquer une première partie de cordon continue d'un matériau de recouvrement sur le tube de transfert de chaleur ou la surface de membrane en utilisant une tête de soudure pour faire fondre le matériau de recouvrement ;
appliquer une deuxième partie de cordon continue du matériau de recouvrement sur le tube de transfert de chaleur ou la surface de membrane en utilisant une tête de soudure pour faire fondre le matériau de recouvrement, la deuxième partie de cordon chevauchant partiellement la première partie de cordon, formant une rainure entre la première partie de cordon et la deuxième partie de cordon ; et
appliquer une troisième partie de cordon continue d'un matériau de recouvrement sur le tube de transfert de chaleur ou la surface de membrane en utilisant une tête de soudure pour faire fondre le matériau de recouvrement dans la rainure entre la première partie de cordon et la deuxième partie de cordon, de façon à former une surface relativement lisse, la structure de soudure de recouvrement comprenant de multiples premières et deuxièmes parties de cordon continues successives et **caractérisé en ce que** la structure de soudure de recouvrement comprend
de multiples troisièmes parties de cordon continues successives ayant d'environ 10 % de chevauchement à environ 10 % d'écartement entre les troisièmes parties de cordon continues successives.

2. Procédé selon la revendication 1, dans lequel le matériau de recouvrement de la troisième partie de cordon continue est le même que celui de la première partie de cordon continue et de la deuxième partie de cordon continue.

3. Procédé selon la revendication 1, dans lequel la première partie de cordon continue et la deuxième partie de cordon continue sont appliquées en utilisant une tête de soudure commune.

4. Procédé selon la revendication 3, dans lequel la première partie de cordon continue, la deuxième partie de cordon continue, et la troisième partie de cordon continue sont appliquées en utilisant une tête de soudure commune.

5. Procédé selon la revendication 1, dans lequel la première partie de cordon continue et la deuxième partie de cordon continue sont appliquées en utilisant des premiers paramètres de soudage, et la troisième partie de cordon continue est appliquée en utilisant des seconds paramètres de soudage, qui sont différents des premiers paramètres de soudage.

6. Procédé selon la revendication 1, dans lequel la première partie de cordon continue et la deuxième partie de cordon continue forment un recouvrement de tube en spirale, et le troisième partie de cordon continue forme un autre recouvrement de tube spiral.

7. Procédé selon la revendication 1, dans lequel la première partie de cordon continue, la deuxième partie de cordon continue et la troisième partie de cordon continue forment des cordons droits parallèles.

8. Structure de soudure de recouvrement sur un tube de transfert de chaleur ou une surface de membrane, la structure de soudure de recouvrement comprenant :
une première partie de cordon continue d'un matériau de recouvrement appliquée sur le tube de transfert de chaleur ou la surface de membrane en utilisant une tête de soudure pour faire fondre le matériau de recouvrement ;
une deuxième partie de cordon continue du matériau de recouvrement appliquée sur le tube de transfert de chaleur ou la surface de membrane en utilisant une tête de soudure pour faire fondre le matériau de recouvrement, la deuxième partie de cordon chevauchant partiellement la première partie de cordon, formant une rainure entre la première partie de cordon et la deuxième partie de cordon ; et
une troisième partie de cordon continue d'un matériau de recouvrement appliquée sur le tube de transfert de chaleur ou la surface de membrane en utilisant une tête de soudure pour faire fondre le matériau de recouvrement dans la rainure entre la première partie de cordon et la deuxième partie de cordon, de façon à former une surface relativement lisse, la structure de soudure de recouvrement comprenant de multiples premières et deuxièmes parties de cordon continues successives et **caractérisée en ce que** la structure de soudure de recouvrement comprend
de multiples troisièmes parties de cordon continues successives ayant d'environ 10 % de chevauchement à environ 10 % d'écartement entre les troisièmes parties de cordon continues successives.

9. Structure de soudure de recouvrement selon la revendication 8, dans laquelle le chevauchement moyen entre la première partie de cordon et la deuxième partie de cordon est de moins de 20 %.

10. Structure de soudure de recouvrement selon la revendication 9, dans laquelle le chevauchement moyen entre la première partie de cordon et la deuxième partie de cordon est de moins de 15 %.

11. Structure de soudure de recouvrement selon la revendication 8, dans laquelle le chevauchement moyen entre la première partie de cordon et la deuxième partie de cordon est de moins de 5 mm.

12. Structure de soudure de recouvrement selon la revendication 8, dans laquelle le chevauchement moyen entre la première partie de cordon et la deuxième partie de cordon est de moins de 3 mm.

13. Structure de soudure de recouvrement selon la revendication 8, dans laquelle le matériau de recouvrement de la troisième partie de cordon continue est le même que celui des première et deuxième parties de cordon continues.

14. Structure de soudure de recouvrement selon la revendication 8, dans laquelle la première partie de cordon continue et la deuxième partie de cordon continue forment un recouvrement de tube en spirale, et la troisième partie de cordon continue forme un autre recouvrement de tube en spirale.

15. Structure de soudure de recouvrement selon la revendication 8, dans laquelle la première partie de cordon continue, la deuxième partie de cordon continue et la troisième partie de cordon continue forment des cordons droits parallèles.
